Europäisches Patentamt

European Patent Office

Office européen des brevets

(11) Publication number: **0 170 741**
A1

# EUROPEAN PATENT APPLICATION

(21) Application number: 84305332.3

(22) Date of filing: 06.08.84

(51) Int. Cl.⁴: **H 02 K 37/04**

(43) Date of publication of application: 12.02.86
Bulletin 86/7

(84) Designated Contracting States: **DE FR GB IT**

(71) Applicant: **JAPAN SERVO CO. LTD., No. 7, Kandamitoshiro-Cho, Chiyoda-Ku Tokyo (JP)**

(72) Inventor: **Iwasaki, Hajime, No. 2391-13, Azami Kasakakemura, Nitta-Gun Gunma (JP)**

(74) Representative: **Hustwitt, Philip Edward et al, Hustwitt & Co., Ludgate House 110 Fleet Street, London, EC4A 2AB (GB)**

(54) **Stepping motor with a rotor.**

(57) A stepping motor wherein the configuration of each of pole teeth (8-1) of a rotor has a trapezoidal form and on the outer side of the top of each of the trapezoidal teeth (8-1), a projection (8-2) of a prescribed width is provided. The projections (8-2) of rotor are machined to provide a prescribed outer diameter about a spindle of the rotor acting as a center thereof.

## STEPPING MOTOR WITH A ROTOR

The present invention relates to a stepping motor, and more particularly to a stepping motor with a rotor provided with a plurality of trapezoidal pole teeth on its outer peripheral surface.

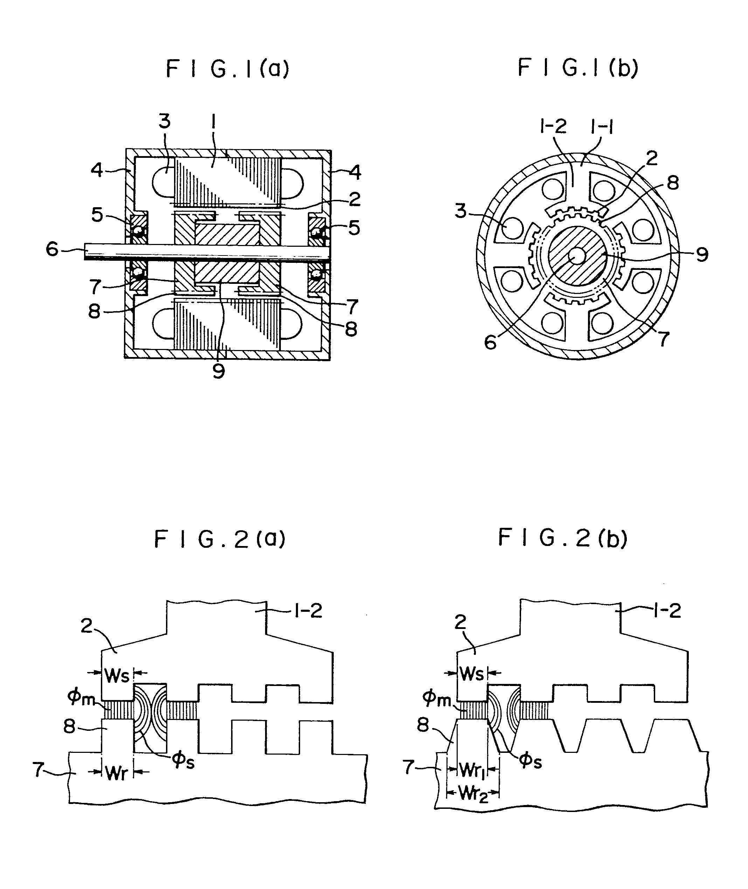

As shown in Figs. 1(a) and 1(b), a conventional stepping motor has a cylindrical yoke 1-1 forming a stator iron core 1, with a plurality of magnetic poles 1-2 provided radially around the inner peripheral surface of the cylindrical yoke 1-1. A plurality of pole teeth 2 are provided on the free end of each magnetic pole 1-2, and a stator winding 3 is wound around each magnetic pole 1-2. The outer peripheral surface of each of two rotor poles 7 is provided with a plurality of pole teeth 8, at the same pitch as that of the pole teeth of the stator 1. The front and rear rotor pole 7 are arranged so that they are offset by half the pitch of the pole teeth 2, 8 from each other. A permanent magnet 9 on which an N-pole and an S-pole are longitudinally mounted is clamped between the two rotor poles 7. The permanent magnet 9 and the rotor poles 7 together form the rotor, and are integrally attached to a rotor spindle 6. The rotor is rotatably supported by a pair of bearings 5 provided on end brackets 4, so that
it faces the stator iron core 1, with a gap therebetween.

In the conventional stepping motor shown in Figs.
1(a) and 1(b), when a current flows sequentially through
each of the stator windings 3 wound around the plurality
of magnet poles 1-2, a force of attraction is generated
between the pole teeth 2 on the front end of the magnet
pole around which the activated winding is mounted and
the pole teeth 8 on the rotor pole 7, and thereby the
rotor is rotatably driven so that the pole teeth 8 of
the rotor pole are aligned with the pole teeth 2 of the
stator magnet pole, and then stops at that aligned posi-
tion. Next, when the current flows through the winding
3 of the adjacent magnet pole, and the current flowing
through the previous winding 3 stops, the rotor is
rotatably driven so that the pole teeth 8 of the rotor
are aligned with the pole teeth 2 of the magnet pole
around which the newly-activated winding is mounted,
and then stops at that new aligned position.

As described above, since the rotor of the stepping
motor is rotatably driven in a step-by-step manner each
time a current is switched so that it flows through a
plurality of windings sequentially, there is a prescribed
proportional relationship between the number of times that
the current flowing through the winding is switched and the rotational angle of the motor. Therefore, the conventional stepping motor acts as a control motor which is suitable for open-loop control, because it is possible to control the rotational angle of the motor by regulating the number of times the current flowing through the windings is switched. An important characteristic of this stepping motor is the accuracy of the step angle which increases step-by-step through a prescribed angle, which is an inherent feature of the stepping motor. However, in order to keep the step angle constant, it is necessary that the pole teeth 8 of the rotor pole 7 are accurately aligned with the pole teeth 2 of the stator when they face each other.

In Fig. 2(a), the relationship between the pole tooth of one magnetic pole of the stator and those of the rotor is shown in detail.

In the example shown in Fig. 2(a), four pole teeth 2 are arranged at equal pitch, and the pole teeth 8 of the rotor pole 7 are arranged at the same pitch. The width Ws of the pole tooth 2 of the stator and the width Wr of the pole tooth 8 of the rotor pole 7 are formed to be approximately the same size. The magnetic flux produced by the current flowing through the winding mounted around the magnetic pole 1-2 is divided mainly into a main magnetic flux $\phi$m flowing

between the adjacent surfaces of the pole teeth 2 and 8 facing each other, and sideways flux $\phi s$ flowing between side surfaces of the pole teeth, and a torque acts on the pole tooth 8 of the rotor pole 7 so that this magnetic flux converges. When the pole teeth 8 of the rotor are aligned with the pole teeth 2 of the stator, the magnetic flux is in a most-converged condition, and the rotor stops.

The larger the fine rotational angle of the pole teeth of the rotor pole near this stationary point, and the rate of converging of the magnetic flux, the larger is the torque acting on the rotor, and thus the stopping accuracy. For this reason, the pole teeth 8 of the rotor poles of other conventional stepping motors are shaped into a trapezoidal form, as shown in Fig. 2(b), so that the tooth width $Wr_1$ of the tops of the tooth is equal to the width Ws of the pole tooth 2 of the stator, and the width $Wr_2$ of the basis of the tooth is larger than the tooth width $Wr_1$. As a result, since the shape of the polar teeth is trapezoidal, the sideways magnetic flux $\phi_s$ issuing from the side surfaces of each of the pole teeth of the stator and rotor increases. An increase in torque caused by this change in sideways magnetic flux $\phi s$, and an action relaxing the magnetic saturation of the teeth bases caused by the enlargement in the tooth base size, produce an effect increasing the torque.

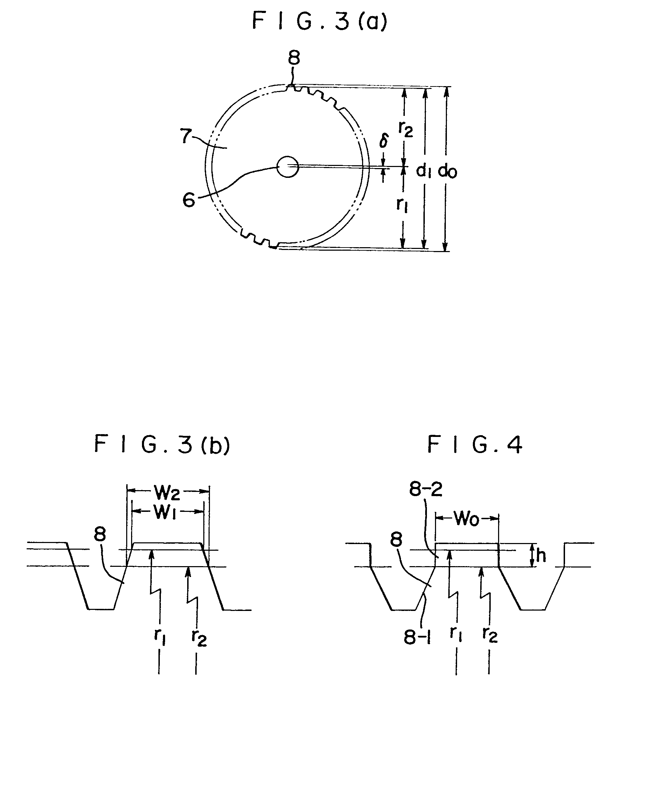

When manufacturing the rotor with the trapezoidal tooth of Fig. 2(b), the rotor pole is formed so that its outer diameter $d_0$ is larger than the prescribed outer diameter size $d_1$ as shown in Fig. 3(a). The resultant rotor pole is machined so that its outer diameter $d_0$ is reduced to $d_1$, about the center of the rotor spindle 6. The reason why this process is required is that since, generally speaking, the efficiency of the stepping motor increases with decreasing clearance between the stator pole teeth and the rotor pole teeth, the outer diameter of the rotor must be precise. However, since it is difficult to make the center of the outer diameter $d_0$ of the rotor pole 7 coincides exactly with the center of the rotor spindle 6 integrally attached to the rotor pole 7, a center offset $\delta$ usually occurs. For this reason, when the outer diameter of the pole teeth 8 of the rotor pole 7 is reduced to $d_1$ by machining about the rotor spindle 6 as the center, the radius of the outer diameter $d_1$ measured from the center of the initial diameter $d_0$ of the rotor pole 7 varies within a range of a maximum $r_1$ to a minimum $r_2$ at symmetrical positions about the center of the rotor spindle 6. For this reason, the width of the tops of the·tooth 8 of the rotor pole 7 after machining varies so that it is $W_1$ at a radial

position $r_1$, and $W_2$ at another radial position $r_2$, as

shown in Fig. 3(b). Since the width of the tops of the pole tooth 8 of the rotor pole varies for each tooth, as described above, the problem arises that the stopping accuracy varies according to the rotor position.

It is an object of the present invention to provide a stepping motor in which the reduction in stopping accuracy due to the configuration of the rotor teeth, as described above, is prevented.

The stepping motor of the present invention comprises: a stator with a cylindrical yoke which is provided with a plurality of magnetic poles radially thereon, each of which has a stator winding wound around it and a plurality of pole teeth at its free end, and a rotor provided with a plurality of pole teeth about its outer peripheral surface and which is positioned within the inner surface of the stator with a gap therebetween;

and is characterized in that the configuration of each of the polar teeth of the rotor has a trapezoidal form and that, on the outer side of the top of each trapezoidal teeth, a projection of a prescribed width is provided.

Other objects and features of the present invention will be explained hereinafter with reference to the

drawings.


Fig. 1(a) is a longitudinal section through a con-

ventional stepping motor;

Fig. 1(b) is a side view thereof;

Fig. 2(a) is an enlarged view of the relationship between the pole teeth of the stator and those of the rotor;

Fig. 2(b) is an enlarged view of the relationship between the pole teeth of the stator and those of the rotor in another conventional stepping motor;

Fig. 3(a) illustrates the rotor pole and the pole teeth;

Fig. 3(b) is an enlarged explanatory view of the pole teeth; and

Fig. 4 is an enlarged explanatory view of the pole teeth of the rotor of the present invention.


In the present invention, as shown in Fig. 4, a projection 8-2 of a prescribed width $W_0$ and a pres-

cribed height h is integrally provided on the outer side of each pole tooth 8-1 of a trapezoidal form.

Since the configuration of the pole tooth 8 of the rotor pole 7 in the present invention has this form, and the projection 8-2 · of the certain width $W_0$ is machined, it is possible to make the dimensions of the tops of all the pole teeth around the entire periphery of the rotor pole the same, even if the outer diameter of the pole teeth 8 is machined at the radial position $r_1$ or $r_2$ when the outer diameter of the rotor pole 7 is reduced to $d_1$ with the rotor spindle 6 acting as the center, if there is any offset of the center of the outer diameter $d_0$ of the rotor pole from that of the rotor spindle 6. As a result, the variation in stopping accuracy due to the position of the rotor is eliminated so as to increase the stopping accuracy, which is the greatest advantage of the present invention.

CLAIMS:

1. A stepping motor comprising: a stator with a cylindrical yoke (1-1) provided with a plurality of magnetic poles (1-2) radially thereon, each of said magnetic poles (1-2) being provided with a stator winding (3) wound therearound and a plurality of pole teeth (2) at the free end thereof; and a rotor provided with a plurality of pole teeth (8-1) about the outer peripheral surface thereof and which is positioned within the inner peripheral surface of said stator with a gap therebetween; characterized in that the configuration of each of said pole teeth (8-1) of said rotor has a trapezoidal form and that, on the outer side of the top of each of said trapezoidal teeth (8-1), a projection (8-2) of a prescribed width is provided.

2. The stepping motor as claimed in claim 1, wherein said projections (8-2) of said rotor are machined to provide a prescribed outer diameter about a spindle of said rotor acting as a center thereof.

0170741

1/2

FIG.1(a)

FIG.1(b)

FIG.2(a)

FIG.2(b)

F I G . 3 (a)

F I G . 3 (b)

F I G . 4

**European Patent Office**

**EUROPEAN SEARCH REPORT**

0170741

Application number

EP 84 30 5332

## DOCUMENTS CONSIDERED TO BE RELEVANT

| Category | Citation of document with indication. where appropriate, of relevant passages | Relevant to claim | CLASSIFICATION OF THE APPLICATION (Int. Cl.4) |
|---|---|---|---|
| X | PATENT ABSTRACTS OF JAPAN, vol. 7, no. 251, 8th November 1983, (E-209) (1396); & JP-A-58-136261 (SUMITOMO DENKI KOGYO K.K.) 13-08-1983 | 1,2 | H 02 K 37/04 |
| A | US-A-4 000 452 (G. HEINE) * Column 1, lines 15-26; column 2, lines 44-64; figure 17b * | 1 | |
| | | | **TECHNICAL FIELDS SEARCHED (Int. Cl.4)** |
| | | | H 02 K 37/00 |

The present search report has been drawn up for all claims

| Place of search | Date of completion of the search | Examiner |
|---|---|---|
| BERLIN | 06-05-1985 | GESSNER E A F |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503 03 82